Europäisches Patentamt

European Patent Office

Office européen des brevets

(11) Publication number: **0 333 694**
**A2**

## (12) EUROPEAN PATENT APPLICATION

(21) Application number: **89890026.1**

(22) Date of filing: **27.01.89**

(51) Int. Cl.⁴: **C 08 K 13/02**
// (C08K13/02,3:22,5:52)

(30) Priority: **18.03.88 US 169786**

(43) Date of publication of application:
**20.09.89 Bulletin 89/38**

(84) Designated Contracting States:
**AT BE CH DE ES FR GB GR IT LI LU NL SE**

(71) Applicant: **FMC Corporation**
**2000 Market Street**
**Philadelphia Pennsylvania 19103 (US)**

(72) Inventor: **Green, Joseph**
**3 New Dover Drive**
**East Brunswick New Jersey 08816 (US)**

(74) Representative: **Pawloy, Heinrich, Dr. et al**
**Patentanwälte Dr. Heinrich Pawloy Dipl.-Ing. Helmut**
**Sonn Dipl.-Ing. Arnulf Weinzinger Riemergasse 14**
**A-1010 Wien (AT)**

(54) Polybrominated phenylphosphate flame retardant thermoplastic composition.

(57) A flame retarding resin composition is provided having excellent thermal stability and good impact resistance. The composition consists of a thermoplastic resin selected from the group of high impact polystyrene, polyethylene terephthalate, polybutylene terephthalate, acrylonitrile-butadiene-styrene polycarbonate and polymer blend and contains a polybrominated triphenylphosphate ester having a molar ratio of bromine to phosphorus of from 6 to 9, and less than 5% antimony oxide.

EP 0 333 694 A2

**Description**

## POLYBROMINATED PHENYLPHOSPHATE FLAME RETARDANT THERMOPLASTIC COMPOSITION

The present invention is a group of flame retardant thermoplastic compositions containing a polybrominated triphenylphosphate and less than 5% antimony oxide.

Thermoplastic resins can be modified by a number of additives which act as flame retardants to hinder ignition or reduce flame spread. These flame retardants frequently must be employed in sufficiently large quantities to significantly change the physical properties of thermoplastic polymers, particularly when processed at elevated temperatures.

Chlorinated flame retardant additives such as chlorinated paraffins are frequently used because of their low cost. However, the chlorinated flame retardants generally have poor thermal stability. Chlorinated flame retardants with good thermal stability are frequently high cost additions and still require the use of up to 15% antimony oxide as a synergist.

Antimony oxide has severe limitations when used as a halogen synergist in thermoplastics. The use of high concentrations of antimony oxide in thermoplastics frequently leads to "after-glow" after flame extinguishment. The fine powder dusts readily during handling. It is recommended that breathing the dust be avoided. Antimony oxide has caused lung tumors in laboratory inhalation studies with animals. Further, in polyethylene terephthalate, polybutylene terephthalate and polycarbonate resins, antimony oxide acts as a depolymerization catalyst.

Generally, between 3% and 8% antimony oxide is used as a halogen synergist in thermoplastics. Up to 15% antimony oxide is sometimes necessary for optimum flame retardancy. It has been found that more than 5% antimony oxide substantially degrades the physical properties of a thermoplastic, for example, the impact resistance. In addition, such high loadings of the white antimony oxide makes it impossible to make a product with deep rich colors.

Bromine compounds are known to be more effective flame retardants than chlorine compounds. However, the added cost of bromine and the limited thermal stability provide limits to its use. Bromo-paraffins have been used in some systems such as polyethylene, polyvinylchloride and polyurethane foam despite their poor heat stability. However, brominated aromatics have emerged to fill the needs of more specialized thermoplastic polymers. Examples are poly(tribromostyrene), poly(dibromophenylene oxide), bis(tetrabromophthalimido)ethane, decabromodiphenyl oxide, bis(tribromophenoxy)ethane and brominated polycarbonate oligomer. These new flame retardants do offer improved thermal stability and chemical resistance over the brominated paraffins. However, each of these compounds are limited in their cost effective application to special resin compositions as a result of plateout, their effect on physical properties, toxicity of brominated furans and dioxins on heating and the like. Also, in many applications over 5% antimony oxide must be used to attain excellent flame retarding qualities.

Cost effective phosphorus compounds are known, such as phosphate esters, with or without halogen. Typical compounds are the alkyl, alkaryl and triaryl phosphates used as plasticizers in PVC, and the halogenated alkylphosphates and phosphonates used in urethane foams, phenolics, acrylics and epoxies. Limited thermal stability, volatility and the tendency to plasticize limit the use of these additives.

The present invention provides flame retardant thermoplastic compositions having thermal stability, good impact properties and the good processability normally associated with the nonflame retarded thermoplastic resin, the composition consisting essentially of a resin selected from the group consisting of polystyrene, high impact polystyrene, polyethylene terephthalate, polybutylene terephthalate, acrylonitrile-butadiene-styrene, polycarbonate, polyurethane, polycarbonate-polybutylene terephthalate blends and polycarbonate-acrylonitrilebutadiene-styrene blends, a flame retarding amount of a polybrominated triphenylphosphate ester, said ester having a molar ratio of bromine to phosphorus of from 6 to 9 and less than 5% antimony oxide.

Any polybrominated triphenylphosphate ester having a bromine to phosphorus mol ratio of 6 to 9 will be satisfactory. If a solid ester is desired it is desirable that each phenyl radical contains either two or three bromine atoms. For example, if the ester is to be manufactured by the reaction of brominated phenols and phosphoric oxychloride, the phenols would desirably be present primarily as 2,4-dibromophenol, 2,4,6-tribromophenol or mixtures of the two. Preferably, the ester will be either tris(2,4-dibromophenyl)phosphate or tris(2,4,6-tribromophenyl)phosphate. On the other hand if a lower melting or liquid ester is desired one would use a mixture of esters. The scope of this invention is also intended to include a mixed ester such as bis(2,4,6-tribromophenyl)phenyl phosphate.

Antimony oxide may be supplied when desired as a salt, such as sodium antimonate, or as commercial antimony oxide.

Polybromotriphenyl phosphates are known to be flame retardants for some thermoplastic resin systems. For example, U.S. Patent No. 4,710,530 teaches a styrene modified polyphenylene ether composition containing a polybromotriphenyl phosphate as a flame retardant and does not contain any antimony oxide. Japanese Patent Publication 43/52074 discloses a flame retardant polyolefin composition suitable for melt spinning polypropylene containing a mercaptan and a polybrominated triphenylphosphate. U.S. Patent No. 4,021,406 teaches flame retarding polypropylene consisting of a halogen-containing organic compound having a volatilizing temperature of greater than 200°C and antimony oxide. Up to 9% antimony oxide is required to obtain a V-0 rating in the UL-94 test.

Unlike the alkyl, alkaryl and aryl phosphate esters known to the prior art, the present polybrominated triphenylphosphate esters do not function significantly as plasticizers. The triaryl phosphate esters are thermally stable, high-boiling (greater than 350°C) materials. Their efficacy as flame retardants is believed to be because they volatilize without significant decomposition into the flame zone, where they decompose.

The preferred polybrominated triphenylphosphate esters of the present invention are solids and cannot be distilled under conventional plant conditions. Consequently, they would not be expected to volatilize into the flame zone as do the triaryl phosphates. The polybrominated triphenylphosphates may be incorporated into the composition in an amount ranging from 1% to 50%. Desirably from 0.2% to 20% will be present in the composition when polystyrene is the resin and 5% to 30% will be present when the resin is high impact polystyrene, polyethylene terephthalate, polybutylene terephthalate, acrylonitrilebutadiene-styrene, polycarbonate, polyurethane, polycarbonate-polybutylene terephthalate blends and polycarbonate-acrylonitrile-butadiene-styrene blends.

The present invention is further illustrated by the following examples.

## EXAMPLE 1

Tris(2,4-dibromophenyl)phosphate (TDBP) is compared with a bromine-containing polycarbonate oligomer marketed by Great Lakes Chemical Co. under the tradename BC-58. The compositions were compounded in a Brabender mixer. Table I compares the oxygen index of the compositions prepared using GE's Lexan 141 polycarbonate resin and no antimony oxide.

## EXAMPLE 2

Tris(2,4,6-tribromophenyl)phosphate (TTBP), TDBP and BC-58 were compared as indicated in Table II. The compositions were prepared by extrusion compounding and injection molding.

TDBP lowered the heat distortion temperature about 10°C (20°F), but the TTBP resin had the same value as the BC-58 resin. All three samples were transparent and indistinguishable from each other. The phosphate ester products visually appeared to process easier than the BC-58 product. Spiral flow measurements during injection molding confirm this observation.

## EXAMPLE 3

Mineral-filled polybutylene terephthalate resin (Valox 745) was flame retarded with TDBP. An increasing oxygen index with increasing concentration was observed with no antimony oxide used. At 16% TDBP a UL-94 V-0 product was obtained. The equivalent BC-58 containing resins burned as shown by Table III.

## EXAMPLE 4

A glass-filled polybutylene terephthalate resin (Valox 420) was compared with TDBP and BC-58 with the results presented as Table IV. Another commercial product is decabromodiphenyl oxide. This product blooms from PBT but TDBP was shown not to bloom when aged at 175°C.

## EXAMPLE 5

An ABS composition was prepared according to the formulation of Table IV of U.S. Patent No. 4,021,406. The compositions were extruded and injection molded.

It was anticipated the composition would have a poor impact resistance because perchloropentacyclodecane is a nonmelting pigment and its high concentration plus the high concentration of antimony oxide pigment is expected to significantly reduce the impact. This was confirmed as shown in Table V which compares a composition of the reference and one of the present invention having the same burn time in the UL-94 vertical burn test.

The composition of U.S. Patent No. 4,021,406 has a Gardner impact of less than $5 \times 10^{-2}$ Joules, a very brittle composition which is not acceptable commercially. The invention composition containing 21.5% TTBP has a Gardner value of 8 Joules.

U.S. Patent No. 4,021,406 also teaches that the ABS comparative composition containing 38 phr of total flame retardant results in only a SE-1 UL-94 rating and that 46 phr are needed for a SE-0 rating. The latter is illustrated as the patent comparison in Table V. In the present invention only 32.6 phr gives a SE-0 product. The composition in Table V is given in percent rather than phr.

The lower heat distortion temperature of the inventive sample is the consequence of the lower inert solids content.

3

## EXAMPLE 6

Example 5 was repeated comparing Great Lakes Chemical Company's FF-680 brand of bis(tribromophenoxy)ethane, the industry standard and TDBP with 3% and 4% antimony oxide. The results are presented as Table VI. The table illustrates the superior performance of the present composition to commercial compositions with respect to burn time and oxygen index. Another advantage not evident from the Table is that FF-680 plates out while the claimed invention composition does not.

## EXAMPLE 7

Compositions of Rynite 530 brand of polyethylene terephthalate (PET) were compounded as indicated in Table VII and the oxygen index and UL-Vertical Test parameters determined. The results show that TDBP alone is more effective on a weight basis than TDBP plus antimony provided as sodium antimonate.

## EXAMPLE 8

The unexpected efficacy of TDBP in blends of polycarbonate and ABS is demonstrated in Table VIII. A Mobay MC-2500 blend is compared with ABS (from Table V) and a polycarbonate (from Table II).

## EXAMPLE 9

High impact polystyrene was compounded with 14% TTBP and 4% antimony oxide. The composition had an oxygen index of 24.3 and a UL-94 rating of V-0 with an 0.25 sec. burn time illustrating the exceptional effectiveness of the present composition.

## EXAMPLE 10

Polyurethane foams were prepared from 100 parts Niax 15-56 polyol, 45 parts water, 5.7 parts Freon, and 57.4 parts Mondur-80 toluenediisocyanate and 18 parts brominated flame retardant. The samples were tested by the California 117 flammability standard. Results are presented as Table IX.

It is known that phosphorus is a highly effective flame retardant in polyurethanes. Therefore, it is not surprising that tris p-bromophenyl phosphate and diphenyl (2,4,6-tribromophenyl) phosphate which each have 7% phosphorus and 54.2% bromine would be equal to each other and more effective than an equal quantity of TDBP which contains only 4.5% phosphorus and 70.9% bromine. Instead, Table IX shows that the efficacy of polybrominated triphenylphosphate esters cannot be predicted, and surprisingly that TDBP is effective.

## EXAMPLE 11

A blend of 45 parts Lexan 141 polycarbonate resin, 45 parts Valox 325 polybutylene terephthalate (PBT), 0.5 parts Teflon powder and 14 parts TDBP were evaluated without any antimony compound. The oxygen index was 33.0 and the UL-94 rating was V-0 with a burn time of 0.9 sec. This blend shows an unexpectedly lower flammability compared with a polycarbonate resin alone (Table II) or a PBT resin alone (Tables II or IV). The equivalent blend containing 14 parts of the brominated carbonate oligomer (BC-58) burns as shown in Table X.

TABLE I

COMPARISON OF OXYGEN INDEX OF
TRIS(2,4-DIBROMOPHENYL)PHOSPHATE
(TDBP) AND BC-58 IN POLYCARBONATE

| | Oxygen Index | |
|---|---|---|
| % Concentration of Flame Retardant | TDBP | BC-58 |
| 2 | 28 | 28 |
| 4 | 31 | 29 |
| 6 | 35 | 30 |
| 8 | 40 | 31 |

TABLE II

FLAME RETARDING POLYCARBONATE RESIN

| Lexan 141 % | 93 | 93 | 93 |
|---|---|---|---|
| BC-58 % | 7 | - | - |
| TDBP % | - | 7 | - |
| TTBP % | - | - | 7 |
| Oxygen Index | 32.1 | >39.6 | 32.4 |
| UL-94, Rating | V-O | V-O | V-O |
| UL-94, Time, Sec. | 3.8 | 2.4 | 4.7 |
| Heat Distortion Temp. @ 1.82 MPa °C | 127 | 115 | 129 |
| Gardner Impact kPa | 2.2 | 2.2 | 2.2 |
| Spiral flow, Inj. Molding, inches | 23.5 | 29.5 | - |

TABLE III

FLAME RETARDING MINERAL-FILLED PBT

| Valox 745 % | 84 | 84 | 84 | 84 |
|---|---|---|---|---|
| BC-58 % | 12 | - | 16 | - |
| TDBP % | - | 12 | - | 16 |
| Antimony Oxide % | 4 | 4 | - | - |
| Oxygen Index | 31.8 | 29.7 | 29.1 | 31.2 |
| UL-94, Rating | V-O | V-O | Burns | V-O |
| UL-94, Time, Sec. | 0 | 3.7 | - | 3.1 |

TABLE IV

## FLAME RETARDING GLASS-FILLED PBT

| Valox 420 | 82.5 | 82.5 |
|---|---|---|
| BC-58 | 14 | - |
| TDBP | - | 14 |
| Antimony Oxide | 3.5 | 3.5 |
| Teflon Powder | 1.0 | 1.0 |
| Oxygen Index | 33.3 | 30.6 |
| UL-94, Rating | V-O | V-O |
| UL-94, Time, Sec. | 0 | 0 |
| Heat Distortion Temp. @ 182 MPa $^\circ$C | 192 | 188 |

TABLE V

### ABS RESIN COMPARISON WITH U.S. PATENT NO. 4,021,406

| | Sample | Patent Comparison |
|---|---|---|
| ABS Resin % | 75 | 68.5 |
| Dechloran % | - | 17.1 |
| TTBP % | 21.5 | 5.5 |
| Antimony Oxide % | 3 | 8.9 |
| Other* % | 0.5 | |
| Heat Deflection Temp. @ 182 MPa $^\circ$C | 69 | 72 |
| Impact - Gardner | 75 | <5 |
| Oxygen Index | 34.2/35.1 | 34.2 |
| UL-94-Vert. Rating | V-O | V-O |
| UL-94-Av. Burn Sec. | 0.2/0.9 | 0.2 |

*Other 0.25% ULTRANOX 2

0.25% WESTON 618

6

TABLE VI

COMPARISON OF ABS FORMULATION WITH
BIS(TRIBROMOPHENOXY)ETHANE (FF-680)
AND TDBP

| | | | |
|---|---|---|---|
| ABS Resin % | 75.5 | 75.5 | 74.5 |
| FF 680 % | 21.5 | | |
| TDBP % | | 21.5 | 21.5 |
| Antimony Oxide % | 3 | 3 | 4 |
| HDT @ 182 MPa, °C | 66 | 66 | 64 |
| Oxygen Index | 27.3 | 28.5 | 29.7 |
| UL-94-Vert. Burn Rating | V-O | V-O | V-O |
| Av. Burn Sec. | 3.2 | 0.85 | 1.6 |

TABLE VII

FLAME RETARDING POLYETHYLENE
TEREPHTHALATE (PET)

| | | | |
|---|---|---|---|
| Rynite 530 (PET) % | 82 | 80 | 82 |
| Teflon Powder % | 1 | 1 | 1 |
| TDBP % | 18 | 20 | 14 |
| Sodium Antimonate % | - | - | 4 |
| Oxygen Index | 32.1 | 35.7 | 30.0 |
| UL-94, Rating | V-1 | V-0 | Burn |
| UL-94, Time, Sec. | 7.6 | 2.9 | |

## TABLE VIII

### EFFICACY IN POLYCARBONATE/ABS BLENDS

| | Polycarbonate | ABS | Polycarbonate/ ABS Blend |
|---|---|---|---|
| Resin % | 93 | 75 | 87 |
| TDBP % | 7 | 21.5 | 10 |
| Antimony Oxide % | 0 | 3 | 3 |
| Oxygen Index | >39.6 | 28.5 | 27 |
| UL-94, Rating | V-0 | V-0 | V-0 |
| UL-94, Sec. | 2.4 | 2.4 | 0.3 |

## TABLE IX

### POLYURETHANE FLEXIBLE FOAM

| Flame Retardant | Char Length Cm. | After Flame Time Sec. |
|---|---|---|
| TDBP | 11.2 | 4.2 |
| Tris p-bromophenyl phosphate | 8.9 | 3.2 |
| Diphenyl(2,4,6-tribromophenyl)phosphate | 5.7 | 1.2 |
| Calif. 117 Standard Spec. | ≦15.2 | ≦5 |

## TABLE X

### FLAME RETARDING POLYCARBONATE/PBT BLEND

| Polycarbonate | 45 | 45 |
|---|---|---|
| PBT | 45 | 45 |
| BC-58 | 14 | - |
| TDBP | - | 14 |
| Teflon Powder | 0.5 | 0.5 |
| Oxygen Index | 24.8 | 33.0 |
| UL-94, Rating | Burns | V-0 |
| UL-94, Time, Sec. | - | 0.9 |

**Claims**

1. A flame retardant thermoplastic composition having thermal stability, good impact properties and the good processability normally associated with the nonflame retarded thermoplastic resin, the composition characterized by a resin selected from polystyrene, high impact polystyrene, polyethylene terephthalate,

8

polybutylene terephthalate, acrylonitrile-butadiene-styrene, polycarbonate, polyurethane, polycarbonate-polybutylene terephthalate blends and polycarbonate-acrylonitrile-butadiene-styrene blends, a flame retarding amount of a polybrominated triphenylphosphate ester, said ester having a molar ratio of bromine to phosphorus of from 6 to 9 and less than 5% antimony oxide.

2. The composition of claim 1 characterized in that the polybrominated triphenylphosphate ester is tris(2,4- dibromophenyl)phosphate.

3. The composition of claim 1 characterized in that the polybrominated triphenylphosphate ester is tris(2,4,6- tribromophenyl)phosphate.

4. The composition of claim 1 characterized in that the composition is high impact polystyrene with from 5% to 30% polybrominated triphenylphosphate and 4% or less antimony oxide.

5. The composition of claim 1 characterized in that the composition is a polycarbonate resin with from 5% to 30% polybrominated triphenylphosphate with no antimony oxide.

6. The composition of claim 1 characterized in that the composition is a polybutylene terephthalate resin with from 5% to 30% polybrominated triphenylphosphate and from 0% to 5% antimony oxide.

7. The composition of claim 1 characterized in that the composition is a polyethylene terephthalate resin with from 5% to 30% polybrominated triphenylphosphate and from 0% to 4% sodium antimonate.

8. The composition of claim 1 characterized in that the composition is an acrylonitrile-butadiene-styrene resin with from 5% to 30% polybrominated triphenylphosphate and less than 4% antimony oxide.

9. The composition of claim 1 characterized in that the composition is a polycarbonate/acrylonitrile-butadiene-styrene blend with from 5% to 30% polybrominated triphenylphosphate and less than 5% antimony oxide.

10. The composition of claim 1 characterized in that the composition is a styrene polymer with from 0.2% to 20% polybrominated triphenylphosphate and less than 4% antimony oxide.

11. The composition of claim 1 characterized in that the composition is a polyurethane resin with from 5% to 30% polybrominated triphenylphosphate and less than 4% antimony oxide.

12. The composition of claim 1 characterized in that the composition is a polycarbonate-polybutylene terephthalate blend with from 5% to 30% polybrominated triphenylphosphate and less than 4% antimony oxide.

13. The composition of claim 1 characterized in that the composition is a polycarbonate-acrylonitrile-butadiene-styrene blend with from 5% to 30% polybrominated triphenylphosphate and less than 4% antimony oxide.